# EUROPÄISCHE PATENTSCHRIFT

(11) **EP 0 499 864 B1**
(45) Veröffentlichungstag und Bekanntmachung des Hinweises auf die Patenterteilung: **06.09.1995**
(21) Anmeldenummer: 92101678.8
(22) Anmeldetag: 01.02.1992
(51) Int. Cl.: C09C 1/00, C09C 3/06

(54) **Russhaltige Pigmente**
Carbon black containing pigments
Pigments contenant du noir de carbone

(30) Priorität: 16.02.1991 DE 4104846
(43) Veröffentlichungstag der Anmeldung: 26.08.1992
(73) Patentinhaber: MERCK PATENT GmbH, D-64271 Darmstadt (DE)
(72) Erfinder: Prengel, Constanze, Dr., W-6108 Weiterstadt (DE); Bernhardt, Klaus, W-6114 Gross-Umstadt (DE)

(56) Entgegenhaltungen:
- DE-A- 1 165 182
- FR-A- 2 336 456

## Beschreibung

Die Erfindung betrifft rußhaltige Pigmente mit verbesserter Abriebfestigkeit.

Es ist bekannt, daß durch Einarbeiten von Ruß in Pigmente besondere Farbeffekte erzielt werden können. Die bekannten Verfahren sind jedoch mit teilweise erheblichen Nachteilen behaftet.

In der DE-AS 11 65 182 ist ein aufwendiges Verfahren beschrieben, wonach der Ruß durch Pyrolyse organischer Verbindungen in Gegenwart der zu beschichtenden Pigmente gebildet wird. Dabei scheidet sich der Ruß naturgemäß lediglich auf der Pigmentoberfläche ab. Zwischenräume zwischen TiO₂-Teilchen, die auf einer Glimmeroberfläche aufgebracht sind, werden dabei ausgeglättet.

Der Nachteil des aufwendigen Pyrolyseverfahrens ist in der DE-PS 25 57 796 nicht mehr vorhanden. Bei dem dort beschriebenen Verfahren wird zunächst eine Substrat- mit einer Rußdispersion vermischt. Durch Zugabe einer Metallsalzlösung unter Hydrolysebedingungen wird so eine rußhaltige Metallhydroxidschicht auf das Substrat aufgefällt. Die auf diese Weise hergestellten Produkte werden abgetrennt und bei 110°-130 °C getrocknet. Es hat sich jedoch herausgestellt, daß die getrockneten Pigmente für verschiedene Verwendungszwecke ungeeignet sind, da sie unzureichende Abriebfestigkeit besitzen. Gerade zur Einarbeitung in Kosmetika ist diese Eigenschaft äußerst unerwünscht.

Ein weiterer Nachteil ist das häufig beobachtbare Ausbluten des Rußes beim Suspendieren der Pigmente in organischen Lösungsmitteln zur Herstellung von Lacksystemen.

Es bestand daher ein Bedürfnis zur Herstellung von rußhaltigen Pigmenten mit verbesserter Abriebfestigkeit ohne das Erfordernis eines großen technischen Aufwandes. Diese Aufgabe konnte durch die vorliegende Erfindung gelöst werden.

Es wurde überraschenderweise gefunden, daß man rußhaltige Pigmente mit verbesserter Abriebfestigkeit erhält, wenn man Substrate mit einer rußhaltigen Metallhydroxidschicht belegt und die auf diese Weise hergestellten Produkte nach üblichem Aufarbeiten bei 700°-900° unter Sauserstoffabschluß glüht.

Offenbar entstehen durch Einwirken so hoher Temperaturen feste Rußeinschlußpigmente, die die hohe Abriebfestigkeit begründen. Das oben erwähnte Ausbluten ist ebenfalls nur noch in geringem Maße zu beobachten.

Gegenstand der Erfindung sind daher rußhaltige Pigmente mit verbesserter Abriebfestigkeit, erhältlich durch Beschichten von Substraten, die als eine wäßrige Suspension mit einer Rußdispersion vermischt werden, wobei zu der wäßrigen Mischung von Substrat und Ruß eine wäßrige Lösung mindestens eines Metallsalzes zudosiert und auf das Substrat durch Hydrolyse eine rußhaltige Metallhydroxidschicht und gegebenenfalls danach eine rußfreie Metallhydroxidschicht aufgefällt wird, dadurch gekennzeichnet, daß das Produkt nach dem Abtrennen und gegebenenfalls nachfolgendem Waschen und Trocknen bei 700°-900 °C unter Sauerstoffabschluß geglüht ist.

Gegenstand der Erfindung ist auch ein Verfahren zur Herstellung von rußhaltigen Pigmenten mit verbesserter Abriebfestigkeit, dadurch gekennzeichnet, daß man eine wäßrige Substratsuspension herstellt und anschließend eine Lösung mindestens eines Metallsalzes zugibt, wobei der Ruß entweder in der Substratsuspension oder in der Metallsalzlösung fein dispergiert ist oder getrennt als wäßrige Rußdispersion gleichzeitig mit der Metallsalzlösung zur Substratsuspension gegeben wird, und wobei der pH-Wert der Substratsuspension durch gleichzeitige Zugabe einer Base in einem Bereich gehalten wird, der die Metallsalzhydrolyse bewirkt, und daß man gegebenenfalls anschließend nach dem genannten Verfahren eine weitere Metallsalzhydrolyse, jedoch ohne erneuten Rußzusatz, durchführt, das auf diese Weise beschichtete Substrat abtrennt, gegebenenfalls wäscht, trocknet und unter Sauerstoffausschluß bei 700°-900 °C glüht.

Gegenstand der Erfindung ist auch die Verwendung von Pigmenten nach den Ansprüchen 1 und 2 in Formulierungen wie Lacken, Farbstoffen, Kunststoffen und Kosmetika.

Gegenstand der Erfindung sind schließlich Formulierungen, die die erfindungsgemäßen Pigmente enthalten.

Es war völlig überraschend, daß nach dem erfindungssgemäßen Verfahren überhaupt reproduzierbar rußhaltige Pigmente hergestellt werden könnten. Aufgrund von Untersuchungen und Beobachtungen an Rußen war der Fachmann davon abgehalten, die rußhaltigen Pigmente überhaupt solch hohen Temperaturen auszusetzen. Wie beispielsweise aus der Firmenschrift eines Herstellers von Rußen (Fa. Degussa, BRD) hervorgeht, werden Ruße in der Regel beim Tempern ab 450 °C irreversibel unter Bildung verschiedener, vielfach nicht genau bekannter Folgeprodukte zerstört, sogar unter Sauerstoffausschluß, beispielsweise in einer Stickstoffatmosphäre.

Nach dem erfindungsgemäßen Verfahren können praktisch alle zur Herstellung von rußhaltigen Pigmenten geeignete Substrate, die bei Temperaturen von 700° bei 900 °C stabil bleiben, eingesetzt werden. Sie sollten vorteilhaft in fein verteilter Form vorliegen, d.h. in Teilchengrößen zwischen 0,5 und 1000 µm.

Bevorzugt werden als Substrat plättchenförmige Materialien wie Schichtsilikate, plättchenförmige Oxide oder Metallplättchen sowie metalloxidbeschichtete plättchenförmige Materialien verwendet. Insbesondere geeignet sind Glimmer, Talkum, Kaolin, Wismutoxychlorid oder plättchenförmiges Eisenoxid und Glimmerbeschichtungen mit farbigen oder farblosen Metalloxiden wie TiO₂, Fe₂O₃, SnO₂, Cr₂O₃, ZnO und anderen Metalloxiden, allein oder in Mischung in einer einheitlichen Schicht oder in aufeinanderfolgenden Schichten. Diese als Perlglanzpigmente bekannten Pigmente sind z.B. aus den deutschen Patenten und Patentanmeldungen 14 67 468, 19 59 998, 20 09 566, 22 14 545, 22 15 191, 22 44 298, 23 13 331, 25 22 572, 31 37 808, 31 37 809, 31 51 343, 31 51 354, 31 51 355, 32 11 602 und 32 35 017 bekannt.

Zur Herstellung der erfindungsgemäßen rußhaltigen Pigmente können mehrere Verfahrensvarianten angewendet werden. Vorteilhafterweise wird bei allen Verfahren zunächst eine wäßrige Suspension des Substrats hergestellt. In diese Suspension wird dann eine Lösung mindestens eines Metallsalzes eingebracht, wobei der pH-Wert der Substratsuspension durch gleichzeitige Zugabe einer Base in einem Bereich gehalten wird, der die Metallsalzhydrolyse bewirkt. Dabei wird das Metallhydroxid auf die Substratoberfläche aufgefällt. Damit der Ruß, fein dispergiert, in die Metallhydroxidschicht eingebaut werden kann, muß er in geeigneter Form zugeführt werden. Er kann dabei wahlweise schon in der Substratsuspension in fein dispergierter Form vorliegen, oder mit der Metallsalzlösung, entweder zusammen oder getrennt als wäßrige Rußdispersion, zur Substratsuspension gegeben werden.

Dabei kann der Ruß in der Substratsuspension bzw. in der Metallsalzlösung fein dispergiert werden oder es können auch kommerziell, beispielsweise von der Fa. Degussa, BRD erhältliche wäßrige Rußdispersionen wie z.B. Derussol® mit der Substratsuspension bzw. Metallsalzlösung vermischt werden.

Die Wahl der Ruße bzw. Rußdispersionen ist nicht sehr kritisch; so können z.B. alle kommerziell erhältlichen Ruße und Rußdispersionen und auch weitere Ruße und Rußdispersionen eingesetzt werden. Die Primärteilchengröße beträgt vorzugsweise 5-200 nm und insbesondere 10-100 nm.

Die einzelnen Verfahrensparameter zur Beschichtung, d.h. zur Metallsalzhydrolyse sind herkömmlicher Art und ausführlich z. B. in der DE 25 57 796 beschrieben. Alle weiteren Parameter wie z.B. Teilchengrößen, Metallsalzkonzentrationen, Temperaturen und bevorzugte Ausführungsformen können ebenfalls z. B. aus der DE 25 57 796 entnommen werden.

Falls erwünscht, können die erfindungsgemäßen Pigmente auch nach einem der genannten Verfahren nachbeschichtet werden, wobei jedoch vorzugsweise kein zusätzlicher Ruß zugesetzt wird. Auf diese Weise kann die Farbe der Pigmente (der "Schwarzgrad") gezielt eingestellt werden und man erhält neue Farbeffekte.

Nach dem Abtrennen, Waschen und Trocknen der auf diese Weise hergestellten Produkte wird jedoch abschließend bei 700°-900 °C geglüht. Die Glühtemperatur hängt in der Regel vom Metallhydroxid und der aufgefällten Schichtdicke ab; die Glühdauer kann von einigen Minuten bis zu mehreren Stunden, vorzugsweise jedoch zwischen 20 und 120 Minuten betragen.

Die erfindungsgemäß hergestellten Pigmente sind nahezu bis vollständig abriebfest, so daß sie für verschiedene Zwecke, insbesondere in der Kosmetik eingesetzt werden können.

Ein Ausbluten des Kohlenstoffs durch organische Lösungsmittel ist kaum zu beobachten und im Falle von Nachbeschichtungen sogar völlig verschwunden.

Die nachfolgenden Beispiele sollen die Erfindung näher verdeutlichen, ohne sie jedoch zu begrenzen.

### Beispiel 1

100 g Glimmer (Plättchengröße 10-40 µm) werden bei 75 °C in 2 l vollentsalztem (VE) Wasser suspendiert und es wird dann innerhalb 35 min eine Lösung von 2,3 g SnCl₄ . 5 H₂O in 50 ml salzsaurem VE-Wasser hinzudosiert. Danach wird innerhalb 1 h 40 min eine Mischung von 15 g der Rußdispersion Derussol A® mit 200 ml wäßriger TiCl₄-Lösung (353 g TiCl₄/l) hinzugegeben. Der pH-Wert wird während der Zugabe der Ruß-TiCl₄-Mischung mit wäßriger NaOH-Lösung bei 1,8 gehalten. Danach werden innerhalb von 20 Minuten 45 ml einer wäßrigen TiCl₄-Lösung (353 g TiCl₄/l) zugesetzt. Anschließend läßt man auf Raumtemperatur abkühlen, filtriert das erhaltene silber-graue Pigment ab, wäscht mit VE-Wasser salzfrei und trocknet das Pigment 16 h bei 120 °C. Das getrocknete Pigment wird dann zur Erhöhung der mechanischen Beanspruchbarkeit 45 Minuten bei 850 °C im N₂-Strom geglüht.

### Beispiel 2

100 g Glimmer (Plättchengröße 10-40 µm) werden bei 75 °C in 2 l vollentsalztem (VE) Wasser suspendiert und es wird dann innerhalb 35 min eine Lösung von 2,3 g SnCl₄ . 5 H₂O in 50 ml salzsaurem VE-Wasser hinzudosiert. Danach wird innerhalb 1 h 40 min eine Mischung von 15 g der Rußdispersion Derussol A® mit 200 ml wäßriger TiCl₄-Lösung (353 g TiCl₄/l) hinzugegeben. Der pH-Wert wird während der Zugabe der Ruß-TiCl₄-Mischung mit wäßriger NaOH-Lösung bei 1,8 gehalten. Anschließend läßt man auf Raumtemperatur abkühlen, filtriert das erhaltene silber-graue Pigment ab, wäscht mit VE-Wasser salzfrei und trocknet das Pigment 16 h bei 120 °C. Das getrocknete Pigment wird dann zur Erhöhung der mechanischen Beanspruchbarkeit 45 Minuten bei 850 °C im N₂-Strom geglüht. Das erhaltene Pigment ist wegen der fehlenden TiO₂-Deckschicht dunkler als das aus Beispiel 1.

## Patentansprüche

1. Rußhaltige Pigmente mit verbesserter Abriebfestigkeit, erhältlich durch Beschichten von Substraten, die als eine wäßrige Suspension mit einer Rußdispersion vermischt werden, wobei zu der wäßrigen Mischung von Substrat und Ruß eine wäßrige Lösung mindestens eines Metallsalzes zudosiert und auf das Substrat durch Hydrolyse eine rußhaltige Metallhydroxidschicht und gegebenenfalls danach eine rußfreie Metallhydroxidschicht aufgefällt wird, dadurch gekennzeichnet, daß das Produkt nach dem Abtrennen und gegebenenfalls nachfolgendem Waschen und Trocknen bei 700°-900 °C unter Sauerstoffausschluß geglüht ist.

2. Pigmente nach Anspruch 1, dadurch gekennzeichnet, daß als Substrat plättchenförmige Materialien enthalten sind.

3. Verfahren zur Herstellung von rußhaltigen Pigmenten mit verbesserter Abriebfestigkeit, dadurch gekennzeichnet, daß man eine wäßrige Substratsuspension herstellt und anschließend eine Lösung mindestens eines Metallsalzes zugibt, wobei der Ruß entweder in der Substratsuspension oder in der Metallsalzlösung fein dispergiert ist oder getrennt als wäßrige Rußdispersion gleichzeitig mit der Metallsalzlösung zur Substratsuspension gegeben wird, und wobei der pH-Wert der Substratsuspension durch gleichzeitige Zugabe einer Base in einem Bereich gehalten wird, der die Metallsalzhydrolyse bewirkt, und daß man gegebenenfalls anschließend nach dem genannten Verfahren eine weitere Metallsalzhydrolyse, jedoch ohne erneutem Rußzusatz, durchführt, das auf diese Weise beschichtete Substrat abtrennt, gegebenenfalls wäscht, trocknet und unter Sauerstoffausschluß bei 700°-900 °C glüht.

4. Verwendung von Pigmenten nach den Ansprüchen 1 und 2 in Formulierungen wie Lacken, Farbstoffen, Kunststoffen und Kosmetika.

5. Formulierungen, enthaltend Pigmente nach den Ansprüchen 1 oder 2.

## Claims

1. Pigments containing carbon black which have improved abrasion resistance and are obtainable by coating substrates, which are mixed in the form of an aqueous suspension with a carbon black dispersion, an aqueous solution of at least one metal salt being metered into the aqueous mixture of substrate and carbon black and a metal hydroxide layer containing carbon black, optionally followed by a metal hydroxide layer free from carbon black, being precipitated on the substrate by hydrolysis, characterised in that, after separating off and, if appropriate, subsequent washing and drying, the product is calcined at 700°-900°C with the exclusion of oxygen.

2. Pigments according to Claim 1, characterised in that they contain lamellar materials as substrate.

3. Process for the preparation of pigments containing carbon black which have improved abrasion resistance, characterised in that an aqueous substrate suspension is prepared and a solution of at least one metal salt is then added, the carbon black being finely dispersed, either in the substrate suspension or in the metal salt solution, or being added separately in the form of an aqueous carbon black dispersion to the substrate suspension at the same time as the metal salt solution and the pH value of the substrate suspension being maintained, by simultaneous addition of a base, in a range which effects the metal salt hydrolysis, and in that, optionally, following the said process a further metal salt hydrolysis is carried out, but without further addition of carbon black, and the substrate coated in this way is separated off, if appropriate washed and dried and calcined at 700°-900°C with the exclusion of oxygen.

4. Use of pigments according to Claims 1 and 2, in formulations such as coatings, dyes, plastics and cosmetics.

5. Formulations containing pigments according to Claims 1 or 2.

## Revendications

1. Pigments contenant du noir de carbone et ayant une résistance améliorée à l'abrasion, obtenus en revêtant des supports, mélangés à l'état de suspension aqueuse avec une dispersion de noir de carbone, par addition au mélange aqueux du support et du noir de carbone d'une solution aqueuse d'au moins un sel métallique et précipitation sur le support, par hydrolyse, d'une couche d'hydroxyde métallique contenant du noir de carbone puis, le cas échéant, précipitation d'une couche d'hydroxyde métallique exempte de noir de carbone, ces pigments se caractérisant en ce que le produit obtenu, après séparation et éventuellement lavage et séchage, est calciné à des températures de 700 à 900°C à l'abri de l'oxygène.

2. Pigments selon revendication 1, caractérisés en ce qu'ils contiennent en tant que supports des matières à l'état de tablettes.

3. Procédé de préparation de pigments contenant du noir de carbone et ayant une résistance améliorée à l'abrasion, caractérisé en ce que l'on prépare une suspension aqueuse d'un support et on ajoute une solution d'au moins un sel métallique, le noir de carbone étant soit à l'état de dispersion fine dans la suspension du support ou dans la solution de sel métallique, soit ajouté séparément à l'état de dispersion aqueuse de noir de carbone, en même temps que la solution de sel métallique, à la suspension du support, le pH de la suspension du support étant maintenu, par addition simultanée d'une base, dans un intervalle provoquant l'hydrolyse du sel métallique, avec le cas échéant nouvelle hydrolyse d'un sel métallique par le même procédé mais sans adjonction de noir de carbone, on sépare le support ainsi revêtu, le cas échéant on le lave et on le sèche, et on le calcine à des températures de 700 à 900°C à l'abri de l'oxygène.

4. Utilisation des pigments selon les revendications 1 et 2 dans des compositions telles que les peintures, les colorants, les résines synthétiques et les produits cosmétiques.

5. Compositions contenant des pigments selon les revendications 1 ou 2.
